# NEW EUROPEAN PATENT SPECIFICATION

(11) **EP 0 447 998 B2**
(45) Date of publication and mention of the opposition decision: **11.04.2001**
(45) Mention of the grant of the patent: 11.10.1995
(21) Application number: 91104087.1
(22) Date of filing: 16.03.1991
(51) Int. Cl.: C08F 299/02, C08F 291/00

(54) **An aqueous resin composition**
Wässrige Harzzusammensetzung
Composition aqueuse de résine

(30) Priority: 20.03.1990 JP 7024690
(43) Date of publication of application: 25.09.1991
(73) Proprietor: Toyo Boseki Kabushiki Kaisha, Osaka-shi Osaka-fu (JP)
(72) Inventor: Ohashi, Hideyuki, c/o TOYO BOSEKI K.K., Ohtsu-shi, Shiga-ken (JP); Kotera, Nobukazu, c/o TOYO BOSEKI K.K., Ohtsu-shi, Shiga-ken (JP)
(74) Representative: von Kreisler, Alek, Dipl.-Chem.

(56) References cited:
- EP-A- 0 098 752
- EP-A- 0 167 188
- EP-A- 0 189 945
- EP-A- 0 292 004
- EP-A- 0 353 797
- FR-A- 2 020 128
- US-A- 4 297 261
- Römpp Chemie Lexikon, 1989, Vol. 1, p. 612

## Description

### SUMMARY OF THE INVENTION

The aqueous resin composition of this invention, which overcomes the above-discussed and numerous other disadvantages and deficiencies of the prior art, is obtained by polymerizing a resin (A) selected from the group consisting of polyurethane acrylate, polyester acrylate, epoxy acrylate, and polyacrylate having at least one polar group and at least one unsaturated double bond per one molecule with a compound (B) having at least one unsaturated double bond per one molecule in an aqueous solvent containing a water soluble organic compound (D) in water (C),
wherein said resin (A) has a residue of a compound having an unsaturated double bond at the terminal of the molecule of said resin (A) through at least one bond selected from the group consisting of an urethane bond, an ester bond, an ether bond, and an amide bond,
said polar groups are contained in said resin (A) at the rate of 5 to 4000 eq/10⁶ g of resin (A) and are selected from the group consisting of the polar groups represented by the following formulas:
   -COOM₁, 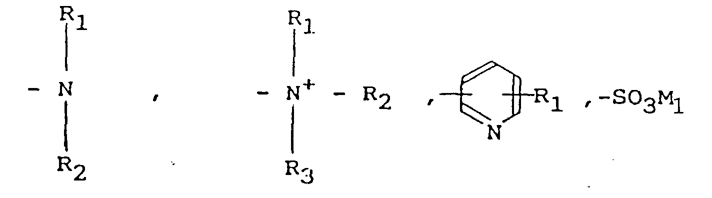 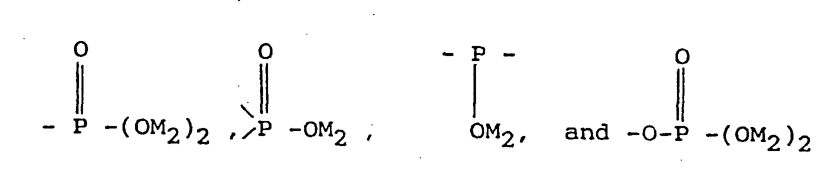
wherein M₁ represents a hydrogen atom, alkali metal, tetraalkylammonium, or tetraalkylphosphonium; M₂ represents a hydrogen atom, alkali metal, a univalent hydrocarbon group, or an amino group; and R₁, R₂ and R₃ independently represent a hydrogen atom, alkyl, allyl, or aralkyl with 1 to 8 carbon atoms, said unsaturated double bond in the resin (A) is an acrylic double bond, an allyl type double bond, or a maleic type double bond and is existing in the resin (A) at a rate of 5 to 1500 eg/10⁶ g of resin (A),
said compound (B) is a compound having an unsaturated double bond selected from an acrylic double bond, an allyl type double bond and a maleic type double bond, or is a compound selected from vinyl acetate, vinyl chloride, vinyl ethers, vinyl esters, heterocyclic vinyl compounds, N-vinyl compounds, styrene or derivatives thereof, and olefin compounds,
said compound (D) is selected from ethanol, isopropanol, methylcellosolve, ethyl-cellosolve and butylcellosolve and is contained in said solvent in an amount not exceeding 70 %, and
the aqueous resin composition is obtained by graft-polymerizing said compound (B) to said resin (A) or by the block copolymerization of said resin (A) and said compound (B).

In a preferred embodiment, the water soluble organic compound (D) dissolves at the rate of 20 g or more per 1 ℓ of water at 20°C.

In a preferred embodiment, the polymerization reaction is a radical polymerization reaction caused by heating.

Thus, the invention described herein makes possible the objectives of (1) providing an aqueous resin composition excellent in its film formation property when a film is formed by applying the composition to various kinds of substrates, wherein the film so obtained is excellent in adhesion with respect to the substrates, water resistance, image clarity, gloss, workability, and hardness; (2) providing an aqueous resin composition with the above-mentioned properties, which remains uniform during the production thereof without causing any gelation; and (3) providing an aqueous resin composition the solid contained in the composition can be dispersed in an aqueous solvent even after the solvent of the composition is removed.

### DESCRIPTION OF THE PREFERRED EMBODIMENTS

A resin (A) used in the present invention has at least one polar group and at least one unsaturated double bond per one molecule. This unsaturated double bond includes acrylic double bond, allyl type double bond or maleic type double bond. Herein, the above-mentioned acrylic double bond refers to a double bond that is contained in a residue (i.e. acryloyl group or methacryloyl group) of acrylic compounds such as acrylic acid, an acrylic acid ester, acrylamide, methacrylic acid, a methacrylic acid ester and methacrylamide.

The resin (A) preferably includes at least one polar group and at least one acrylic double bond per one molecule. For example, a resin having a compound (a) which has an acrylic double bond at the terminal of the molecule through at least one bond selected from the group consisting of an urethane bond, an ester bond, an ether bond, and an amide bond is used. Examples of the above-mentioned compound (a) which has an acrylic double bond include the following compounds:
(a.1) Acrylic compounds having a carboxyl group:
   (Meth)acrylic acid
(a.2) Acrylic compounds having hydroxyl groups:
   Mono(meth)acrylate of glycols such as ethylene glycol, diethylene glycol or hexamethylene glycol; mono(meth)acrylate and di(meth)acrylate of triols such as trimethylol propane, glycerin or trimethylol ethane; mono(meth)acrylate, di(meth)acrylate, and tri(meth)acrylate of polyols with four or more hydroxyl groups such as pentaerythritol or dipentaerythritol; glycerin monoallyl ether; and glycerin diallyl ether.
(a.3) Acrylic compounds having a glycidyl group:
   Glycidyl(meth)acrylate
(a.4) Acrylic compounds having an amide group:
   (Meth)acrylamide, and monomethylol(meth) acrylamide.
(a.5) Acrylic compounds having an isocyanate group:
   (Meth)acryloyloxyethyl isocyanate.

Examples of this type of resin (A) include polyurethane acrylate (A.1), polyester acrylate (A.2), epoxy acrylate (A.3) and other acrylate resins (A.4).

The polyurethane acrylate (A.1) can be generally obtained by i) allowing a resin (b) having hydroxyl groups to react with the acrylic compound (a.5) having an isocyanate group or by ii) allowing the resin (b) having hydroxyl groups to react with the acrylic compound (a.2) having a hydroxyl group and polyisocyanate (c).

Among the above-mentioned materials for preparing the polyurethane acrylate (A.1), the resin (b) having hydroxyl groups includes polyalkylene glycol such as polyethylene glycol, polybutylene glycol and polypropylene glycol; alkylene oxide adducts of bisphenol A; various kinds of glycols; polyester polyol (b.1) having hydroxyl groups at the termini of the molecular chain. Especially, the polyester polyol (b.1) is preferred.

As a carboxylic acid component forming the above polyester polyol (b.1), aromatic carboxylic acids, aliphatic carboxylic acids or alicyclic carboxylic acids with two or more carboxylic groups can be used. Dicarboxylic acids, tricarboxylic acids or tetracarboxylic acids can be used. Examples of the aromatic dicarboxylic acid include terephthalic acid, isophthalic acid, orthophthalic acid and 1,5-naphthal acid. Aromatic oxycarboxylic acids such as p-oxybenzoic acid and p-(hydroxyethoxy)benzoic acid can also be used. Examples of the aliphatic dicarboxylic acid include succinic acid, adipic acid, azelaic acid, sebacic acid and dodecanedicarboxylic acid. Unsaturated aliphatic dicarboxylic acids such as fumaric acid, maleic acid, and itaconic acid can also be used. An example of the alicyclic dicarboxylic acid includes hexahydrophthalic acid. Unsaturated aliphatic dicarboxylic acid such as tetrahydrophthalic acid can also be used. Examples of tri- and tetracarboxylic acids include trimellitic acid, trimesic acid, and pyromellitic acid.

Examples of a glycol component of the polyester polyol (b.1) include ethylene glycol, propylene glycol, 1,3-propanediol, 1,4-butanediol, 1,5-pentanediol, 1,6-hexanediol, neopentyl glycol, diethylene glycol, dipropylene glycol, 2,2,4-trimethyl-1,3-pentanediol, 1,4-cyclohexane dimethanol, ethylene oxide adducts or propylene oxide adducts of bisphenol A, ethylene oxide adducts or propylene oxide adducts of hydrogenated bisphenol A, polyethylene glycol, polypropylene glycol, and polytetraethylene glycol. Any of the above glycol components is diol. Triols or tetraols such as trimethylol ethane, trimethylol propane, glycerin, and pentaerythritol can be incorporated with the above diols. As the polyester polyol (b.1), in addition to the above, lacton type polyester diols obtained by the ring opening polymerization of lactons such as ε-caprolacton can be included.

As polyisocyanate (c) used for preparing polyurethane acrylate (A.1), diisocyanate is mainly used. Examples of the diisocyanate include 2,4-tolylene diisocyanate, 2,6-tolylene diisocyanate, p-phenylene diisocyanate, biphenylmethane diisocyanate, m-phenylene diisocyanate, hexamethylene diisocyanate, tetramethylene diisocyanate, 3,3'-dimethoxy-4,4'-biphenylene diisocyanate, 2,4-naphthalene diisocyanate, 3,3'-dimethyl-4,4'-biphenylene diisocyanate, 4,4'-diphenylene diisocyanate, 4,4'-diisocyanate diphenyl ether, 1,5'-naphtalene diisocyanate, p-xylylene diisocyanate, m-xylylene diisocyanate, 1,3-methylcyclohexane diisocyanate, 1,4-methylcyclohexane diisocyanate, 4,4'-dicyclohexane diisocyanate, 4,4'-cyclohexylmethane diisocyanate, and isophorone diisocyanate. Triisocyanate such as the trimer of 2,4-tolylene diisocyanate and the trimer of hexamethylene diisocyanate can be used in combination with the above diisocyanates. These triisocyanates are added so that the number of isocyanate groups contained in these triisocyanates be 7% or less in the total number of isocyanate groups of the mixture of di- and triisocyanates.

As mentioned above, the polyurethane acrylate (A.1) can be produced by i) allowing the resin (b) having hydroxyl groups to react with the acrylic compound (a.5) having an isocyanate group; or by ii) allowing the resin (b) having hydroxyl groups to react with the acrylic compound (a.2) having hydroxyl groups and the polyisocyanate (c) in accordance with the conventional method for producing polyurethanes.

Among the resins (A), the polyester acrylate (A.2) can be obtained by allowing the polyester polyol (b.1) having hydroxyl groups at the termini of the molecule to react with at least one compound selected from the group consisting of (a.1), (a.2), (a.3) and (a.4) of the compounds (a). The polyester acrylate (A.2) can be also prepared by adding the above compound (a) to the reaction mixture containing monomers for preparing the above polyester polyol (b.1).

The epoxy acrylate (A.3) can be obtained by allowing resins having a glycidyl group (an epi-bis type resin, an epoxy resin, a novolak type epoxy resin) to react with the compound (a) having an acrylic double bond (i.e. at least one compound selected from the group consisting of (a.1), (a.2), (a.3), (a.4) and (a.5)).

Acrylate resins (A.4) can be obtained by allowing glycols such as ethylene glycol, neopentyl glycol, diethylene glycol, trimethylol propane or pentaerythritol to react with at least one compound selected from the group consisting of (a.1), (a.2), (a.3) and (a.4).

The resin (A) used for the aqueous resin composition of the present invention, as mentidned above, has at least one polar group. This kind of resin (A)(i.e., (A.1), (A.2), (A.3) or (A.4)) can be prepared by using various methods. Examples of the methods include i) a process for preparing the resin (A) by using a compound, which is prepared by the use of monomers with a polar group, as a material; ii) a process for preparing the resin (A) by directly using a compound with a polar group as a material; and iii) a process for preparing the resin (A) by using a compound with a polar group as a chain extender or end stopper.

Examples of polar groups which can be contained in the resin (A), and those of monomers which have the polar groups and are capable of forming the resin (A) by using the above method i), ii) or iii) are shown below.

(1) -COOM₁

wherein M₁ is hydrogen, alkali metal, tetraalkylammonium, or tetraalkylphosphonium.

Oxycarboxylic acids such as polycarboxylic acids, glyceric acid, dimethylolpropionic acid, N,N-diethanolglycine, hydroxyethyloxy benzoic acid; aminocarboxylic acids such as diaminopropionic acid, diaminobensoic acid; and derivatives thereof. 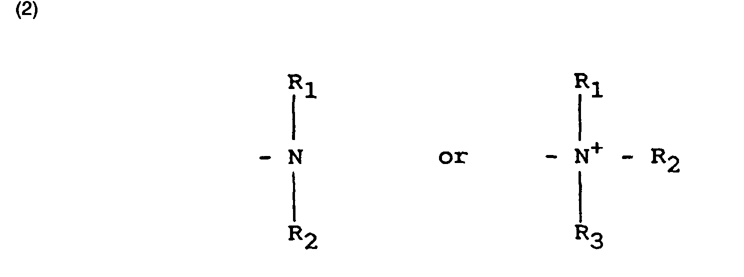 wherein R₁, R₂ and R₃ are independently hydrogen, alkyl containing 1 to 8 carbon atoms, aryl or aralkyl.

Alcohols that contain nitrogen, such as N-methyldiethanolamine, 2-methyl-2-dimethylaminomethyl-1,3-propanol, and 2-methyl-2-dimethylamino-1,3-propanediol. 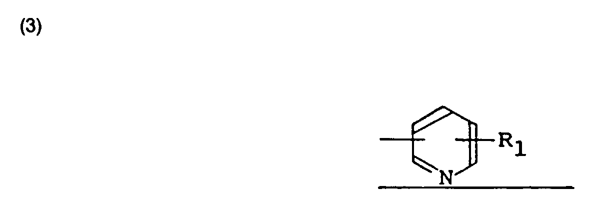 wherein R₁ is the same as defined above.

Compounds that contain a pyridine ring, such as picolinic acid, dipicolinic acid, aminopyridine, diaminopyridine, hydroxypyridine, dihydroxypyridine, aminohydroxypyridine, pyridinedimethanol, pyridine propanol, and pyridineethanol.

(4) -SO₃M₁

wherein M₁ is the same as defined above.

Polycarboxylic acids and derivatives thereof such as 5-sodium sulfoisophthalic acid, 5-tetrabutylsulfonium, sulfoisophthalic acid, sodium sulfosuccinic acid; sodium sulfohydroquinone, and alkylene oxide adducts thereof; and sodium sulfobisphenol A and alkylene oxide adducts thereof. 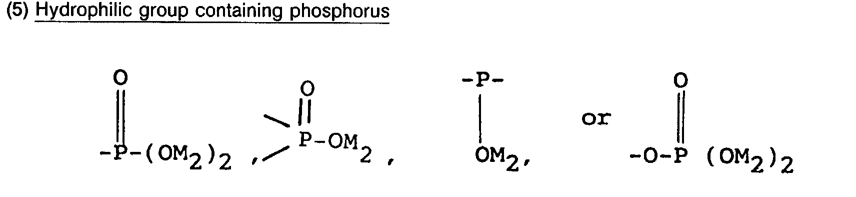 wherein M₂ represents a hydrogen atom, an alkali metallic atom, a univalent hydrocarbon group or an amino group.

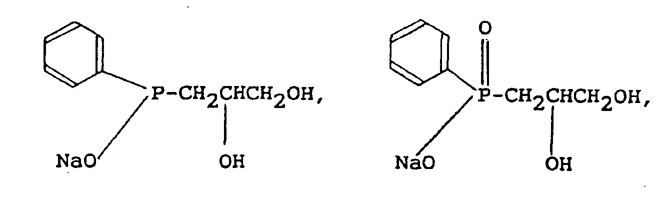

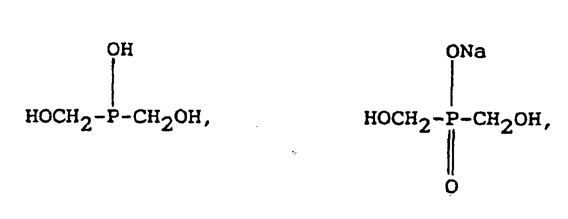

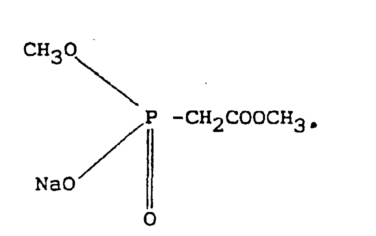

Some of the above compounds (1) to (5), for example in the method i), can be used for preparing the polyester polyol (b.1) which is a material for the polyurethane acrylate (A.1) or the polyalkylene glycol (included in the resin (b) having hydroxyl groups). For example, polycarboxylic acid with a -COOM₁ group can be used for preparing the polyester polyol (b.1). When the polyester polyol (b.1) is prepared by polymerization, the above compounds with a polar group can be added in any stage as long as it is before the polymerization reaction is,completed.

Some of these compounds (1) to (5) can be used in the process ii). For example, polyurethane acrylate resin can be produced by allowing a phosphorus compound having hydroxyl groups to directly react with the polyisocyanate (c), the polyester polyol (b.1) or the compound (a) having an acrylic double bond.

Some of these compounds (1) to (5) can be used as a chain extender or end stopper as described in the process iii). For example, a compound having two hydoroxyl groups (i.e., a diol) can be used as a chain extender for polymers when the polyurethane acrylate (A.1) is prepared. A compound having two carboxyl groups (i.e., a dicarboxylic acid) can be used as a chain extender for polymers when the epoxy acrylate (A.3) is prepared. A diol and dicarboxylic acid can be used as a chain extender for polymers when the polyester acrylate (A.2) is prepared. Moreover, a mono(meth)acrylate of diol can be prepared for being used as a chain extender for polymers when the polyurethane acrylate (A.1) is prepared. Alternatively, a monoethyloxy(meth)acrylate of dicarboxylic acid can be prepared for being used as an end stopper for polymers when the epoxy acrylate (A.3) is prepared. Furthermore, a poly(meth)acrylate can be prepared from the compounds having a plurality of hydroxyl groups, which are selected from the compounds belonging to the groups of (1) to (5), and the poly(meth)acrylate can be used as the resin (A).

As described above, the resin (A) is prepared by the known polymerization method using a desired material so that it has at least one polar group and at least one unsaturated double bond as defined above. The polymerization is performed with or without solvent. The molecular weight of the resin (A) so obtained is usually in the range of 500 to 100,000. The polar group exists at the rate of 5 to 4,000 eq (eq refers to equivalents), preferably 10 to 3,000 eq , and more preferably 20 to 1,000 eq per 10⁶ g of the resin (A). When the content of the polar group is less than 5 eq /10⁶ g, the resin does not readily dissolve or disperse in aqueous medium, and the resistance for organic solvent of the coating film obtained becomes unsatisfactory. On the contrary, when the content of the polar group is more than 4,000 eq /10⁶ g, the degree of the hydrophilic property of the resin is too high and the resistance to water of the coating film obtained becomes poor.

Unsaturated double bonds exist in the resin (A) at the rate of 5 to 1,500 eq. preferably 10 to 1,200 eq and more preferably 50 to 1,000 eq per 10⁶ g of the resin (A). When this rate is less than 5 eq , the resin (A) is not allowed to react with the compound (B) satisfactorily. When this rate exceeds 1,500 eq , the crosslinking reaction between the resin (A) and the compound (B) proceeds excessively, so that the film formation property of a composition obtained is poor. Moreover, when a pigment is added to such a composition in order to prepare a color paint, the film formed by the resulting paint does not have enough image clarity.

Examples of a compound (B) having at least one unsaturated double bond per one molecule, contained in the aqueous resin composition of the present invention include acrylic acid esters, acrylamide and derivatives thereof, methacrylic esters, methacrylamide and derivatives thereof, acrylic acid, methacrylic acid, crotonic acid or derivatives thereof, itaconic acid or derivatives thereof and maleic acid or derivatives thereof.

A water soluble organic compound (D) used for the composition of the present invention is an organic compound which is soluble in water at the rate of 20 g or more per 1 ℓ of water at 20°C. In detail, ethanol, isopropanol, methyl cellosolve, butyl cellosolve and/or ethyl cellosolve are used in view of the dispersibility in water and the film forming properties of the resulting composition. These water soluble organic compounds are used at a rate of up to 70 % by weight with respect to the total amount of water (C) plus these compounds.

In order to obtain an aqueous resin composition of the present invention, the resin (A), the compound (B) and the water soluble organic compound (D) are added in water, and dissolved, or dispersed or emulsified uniformly. There is no special limit to a technique for dissolving or dispersing the resin (A) and the compound (B). For example, the following technique can be used. In cases where the resin (A) is prepared by polymerization reaction in the absence of solvents, the compound (B) having at least one unsaturated double bond per one molecule and if required, the water soluble organic compound (D) are added to the reaction mixture containing the resin (A) and mixed at a temperature in the range of 50 to 150 ° C. Then, the water (C) is added to the resulting mixture, followed by agitation to obtain a dispersion. The above mixture, after heating at a temperature in the range of 50 to 150 ° C, can also be added in water, followed by agitation and dispersion. Alternatively, the compound (B), water (C) and the water soluble organic compound (D) can be added to the reaction mixture containing the resin (A), and mixed by agitation at a temperature in the range of 40 to 120°C. It is also possible that an aqueous dispersion of the resin (A) is previously prepared, and then the compound (B) is added thereto.

In cases where the resin (A) is prepared by polymerization reaction in the presence of organic solvents, the compound (B), water (C) and the water soluble organic compound (D) are added to a solution (i.e., the reaction mixture) containing the resin (A). Then, the organic solvent is removed from the mixture under reduced pressure. Alternatively, water (C) and the water soluble organic compound (D) are added to the organic solvent solution of the resin (A) and remove the organic solvent therefrom, after which the compound (B) is added to the resulting mixture.

In the respective methods described above, for the purpose of increasing the dispersibility of resin particles, if required, a neutralizer for alkali or acid, or a surfactant is added. These can be added after the polymerization reaction described later.

Then, a polymerization initiator is added to the dispersion or emulsion to effect the polymerization reaction. Examples of the polymerization initiator (E) include azo compounds such as azobisisobutyronitrile and azobisisobutylvaleronitrile; organic peroxides such as benzoyl peroxide, isobutyryl peroxide, octanoyl peroxide, cumyl peroxyoctate, t-butyl peroxy-2-ethylhexanoate, t-butyl peroxyacetate, lauryl peroxide, di-t-butyl peroxide and di-2-ethylhexyl peroxydicarbonate; and inorganic peroxides such as potassium persulfate, ammonium persulfate and hydrogen peroxide. In order to stabilize the emulsion and prevent the gelation, it is preferred to use an oil soluble polymerization initiator.

In an aqueous dispersion mixture before the polymerization, containing fine particles of the resin (A), the compound (B), and the water soluble organic compound (D), it is considered that the fine particles of the resin (A) are uniformly dispersed in the solvent, and the particles of the resin (A) are impregnated with the compound (B). Since the water soluble organic compound (D) is contained in the mixture, the resin (A) becomes soft because it is also impregnated with this compound (D), so that the compound (B) more readily penetrates into the particles of the resin (A). The polar group and unsaturated bond contained in the resin (A), the unsaturated bond contained in the compound (B), and if it exists, the polar group contained in the compound (B) are present outside of the surface of the particles of the resin (A). The hydrophobic groups contained in the resin (A) and compound (B) are present inside of the particles. Accordingly, when the polymerization is effected, the unsaturated double bond of the resin (A) is readily allowed to react with the unsaturated double bond of the compound (B). The water soluble organic compound (D) can be contained in the fine particles. Therefore, the fine particles are plasticized (that is, the degree of freedom of the molecules of the resin (A) and the compound (B) becomes high), and the reactivity between the above unsaturated double bonds increases. Thus, when the existing amount of the unsaturated double bonds in the resin (A) is small, the reaction proceeds effectively.

A temperature in the range of 30 to 100°C is desirable for the polymerization reaction. The reaction is effected by the heating and agitation of the mixture. The resin (A) and the compound (B) are polymerized as mentioned above, and a uniform dispersion can be obtained finally. The above-mentioned polymerization reaction is a radical polymerization reaction caused by heating. This reaction usually produces a blocked copolymer or a graft polymer, although the products are varied in accordance with the amount and the type of the resin (A) and the compound (B). A polymer which is partially crosslinked can be produced, and such a crosslinked polymer can be contained in the composition to the extent that the film formation property of the composition is not damaged. The resin in a fine particle form obtained in this way has characteristics derived from the compound (B). Accordingly, even when the solvent of the composition of the present invention containing a resin of a fine particle form is removed, the dispersibility of the fine particles become good by selecting a compound having a suitable hydrophilic group as the compound (B). For example, the dispersibility can be improved by selecting a compound having a -COOH group as the compound (B), followed by the polymerization, and then adding a neutralizer to the mixture to form sodium salt, potassium salt, etc. A coated film obtained by using the composition has excellent water resistance.

An aqueous dispersion thus obtained can be used as an aqueous resin composition of this invention without any additives. However, if required, a cross linking agent (F) can be contained in this dispersion. As the cross linking agent (F), at least one compound selected from the group consisting of amino resin (F.1), epoxy compound (F.2) and polyisocyanate (F.3) is used. Examples of the amino resin (F.1) include formaldehyde adducts of compounds such as urea, melamine, benzoguanamine and acetoguanamine; glyoxal adducts of compounds such as urea and acrylamide; and alkylation products of these adducts formed by using alcohol with 1 to 6 carbon atoms. In addition to the amino resin, it is recommended that formalin, glyoxal, or acetal be used together.

Examples of the epoxy compound (F.2) include diglycidylether of bisphenol A and olygomers thereof, diglycidylether of hydrogenated bisphenol A and olygomers thereof, orthophthalic acid diglycidyl ester, isophthalic acid diglycidyl ester, terephthalic acid diglycigyl ester, p-oxybenzoic acid glycidyl ester ether, tetrahydrophthalic acid diglycidyl ester, hexahydrophthalic acid diglycidyl ester, succinic acid diglycidyl ester, adipic acid diglycidyl ester, sebacic acid diglycidyl ester, ethylene glycol diglycidyl ether, propylene glycol diglycidyl ether, 1,4-butanediol diglycidyl ether, 1,6-hexanediol diglycidyl ether, polyalkyleneglycol diglycidyl ethers, trimellitic acid triglycidyl ester, triglycidyl isocyanurate, 1,4-diglycidyl oxybenzene, diglycidyl methylhydantoin, diglycidyl ethyleneurea, diglycidyl propyleneurea, glycerol polyglycidyl ether, trimethylol ethane polyglycidyl ether, trimethylol propane polyglycidyl ether, pentaerythritol polyglycidyl ether, polyglycidyl ether of glycerol alkylene oxide adducts, methylolglycidamide, and allylglycidyl ether oligomer.

As the polyisocyanate (F.3), aromatic diisocyanates, aliphatic diisocyanates and diisocyantes having aromatic and aliphatic structure can be used. Also, polyisocyanate having three or more isocyanate groups can be used. The polyisocyanate (F.3) can be either a low molecular compound or a high molecular compound. Examples of these compounds include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, and the trimer of isophorone diisocyanate. A compound having an isocyanate group at the terminal, obtained by allowing an excess amount of an isocyanate to react with a low molecular active hydrogen compound or a high molecular active hydrogen compound can also be used. Examples of the above-mentioned low molecular active hydrogen compound include ethylene glycol, propylene glycol, trimethylol propane, glycerin, sorbitol, ethylenediamine, monoethanolamine, diethanolamine and triethanolamine. Examples of the high molecular active hydrogen compound include polyether polyols, polyester polyols and polyamides.

The polyisocyanate compound (F.3) may be blocked isocyanate. This blocked isocyanate can be obtained by effecting the addition reaction between unblocked isocyanate and a blocking agent in accordance with the known method. Examples of the blocking agent of isocyanate include phenols such as phenol, thiophenol, methylthiophenol, ethylphenol, cresol, xylenol, resorcinol, nitrophenol and chlorophenol; oximes such as acetoxime, methyl ethyl ketoxime and cyclohexanone oxime; primary alcohols such as methanol, ethanol, propanol and butanol; halogen-substituted alcohols such as ethylenechlorohydrin and 1,3-dichloro-2-propanol; tertiary alcohols such as t-butanol, t-pentanol and t-butanethiol; and lactams such as ε-caprolactam, δ-valerolactam, γ-butyrolactam and β-propyllactam. In addition, active methylene compounds such as aromatic amines, imides, acetylacetone, acetoacetic acid esters, and malonic acid ethyl ester; mercaptans; imimes; ureas; diaryl compounds; and sodium bisulfite can be used.

It is recommended that a curing agent and a reaction accelerator be used in combination with the above crosslinking agent (F).

If necessary, pigment, paint or various kinds of additives are mixed with the aqueous resin composition of the present invention obtained as described above. The aqueous resin composition of the present invention is applicable in the fields such as making paint, ink, coatings, adhesive agents, and treatment agents for fiber products or paper. The composition of the present invention is preferably used for the in-line coating process in which a base film is produced and then a coating film is formed successively on the base film, or other coating processes.

The coating film obtained by applying the composition of the present invention to a substrate has excellent properties such as adhesion, water resistance and image clarity; and the substrate covered with this coating film has satisfactory hardness and excellent workability.

### (Examples)

Hereinafter, the present invention will be described in detail by way of illustrating examples. In the examples, the term "parts" refers to "parts by weight".

### (1) Preparation of polyesterdiol

First, 485 parts of dimethyl terephthalate, 485 parts of dimethyl isophthalate, 409 parts of ethylene glycol, 485 parts of neopentyl glycol, 33.9 parts of 5-sodium sulfoisophthalic acid and 0.68 parts of tetrabutyl titanate were charged into an autoclave equipped with a thermometer and an agitator, and were heated to a temperature in the range of 150 to 230 ° C for 120 min., thereby effecting the transesterification. Then, 261 parts of adipic acid was added to the mixture, which was allowed to react for one hour at a temperature in the range of 220 to 230°C. Next, the reaction mixture was heated at increasingly higher temperatures up to 250°C over 30 min, and the atmospheric pressure of the system was gradually decreased to 10 mmHg during the additional 45 min. Under this condition, the reaction was continued for a further 60 min. The molecular weight of polyesterdiol (b.1.1) obtained was 2,500.

The type and/or the amount of a carboxylic acid component, a glycol component and a compound having polar groups used for the above-mentioned process were varied as shown in Table 1, and polyester diols (b.1.2), (b.1.3), (b.1.4), and (b.1.5) were obtained by the same process as mentioned above. The components, molecular weight and acid number of the resulting polyesterdiol are shown in Table 1. The components of the polyesterdiol were analyzed by using NMR.

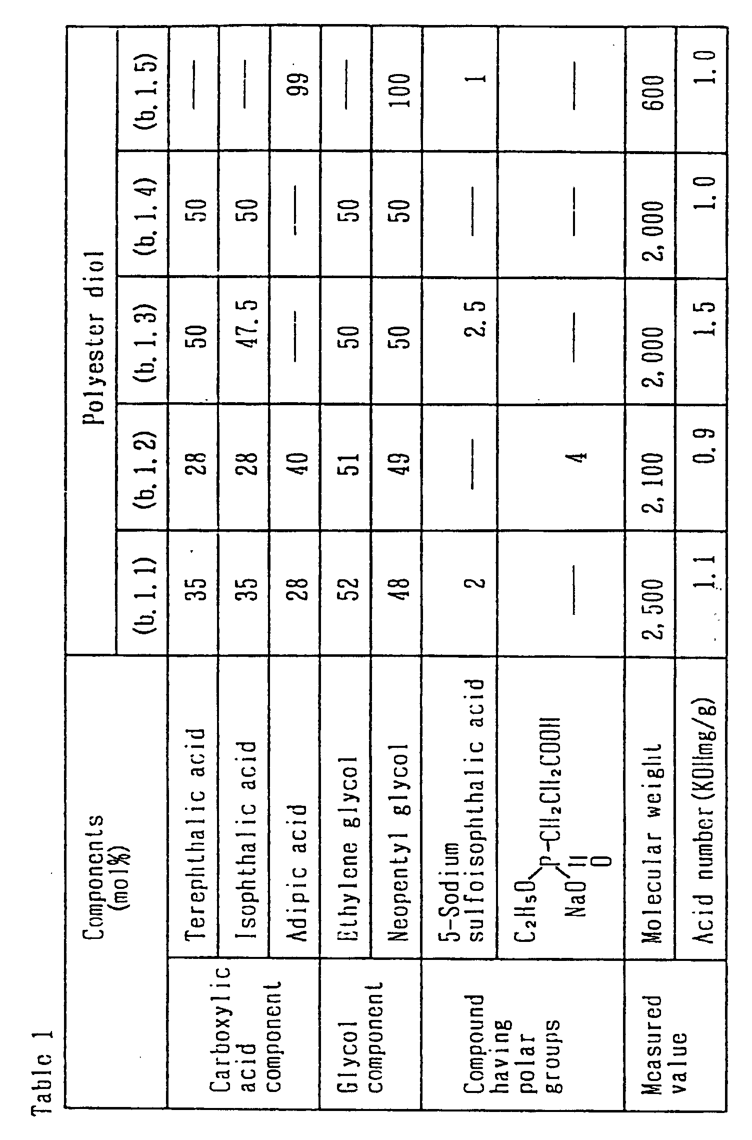

### (2) Preparation of polyurethane acrylate

First, 86 parts of methyl ethyl ketone, 100 parts of the above polyester diol (b.1.1), 20 parts of 4,4'-diphenylmethane diisocyanate (c.1) and 0.05 parts of dibutyltin dilaurate were charged into a reactor equipped with a thermometer, an agitator and a reflux condenser, and were allowed to react for 2 hours at a temperature in the range of 70 to 80°C. Next, to this reaction mixture was added 9.3 parts of 2-hydroxyethyl acrylate (a.2.1) and was allowed to react for 2 hours at a temperature in the range of 70 to 80°C to obtain a polyurethane acrylate resin solution with the solid content of 60% by weight. The molecular weight of this polyurethane acrylate resin (A.1.1) was 3,500, and unsaturated bonds exist therein at the rate of 620 eq /10⁶ g.

The type and the amount of the respective materials used in the above-mentioned process were varied as shown in Table 2, and in the same process as above, polyurethane acrylates (A.1.1), (A.1.2), (A. 1.3), [(A. 1.4), (A.1.5) and (A.1.6), comparative examples], (A.1.7), and (A. 1.8) were obtained by using polyester diol (b.1.2), (b.1.3) or (b.1.4). The components, molecular weight, and content of unsaturated bonds of the respective polyurethane acrylates obtained are shown in Table 2.

### (3) Preparation of polyester acrylate

First, 100 parts of toluene, 100 parts of the above polyester diol (b.1.1), 5.8 parts of acrylic acid (a.1.1), 0.5 parts of p-toluenesulfonic acid and 0.002 parts of phenothiazine were charged into a reactor equipped with a thermometer, an agitator and a water separator having a condenser, and were allowed to react under the reflux of toluene. Next, water was removed from a toluene-water azeotrope obtained in the reaction by the use of the water separator. When 1.45 parts (a theoretical value) of water was distilled, the reaction was completed to obtain a polyester acrylate (A.2.1). A polyester acrylate (A.2.2) was obtained from the polyester diol (b.1.2) by the same method as above.

The molecular weight and content of unsaturated bond of the respective polyester acrylates (A.2.1) and (A.2.2) thus obtained were shown in Table 2.

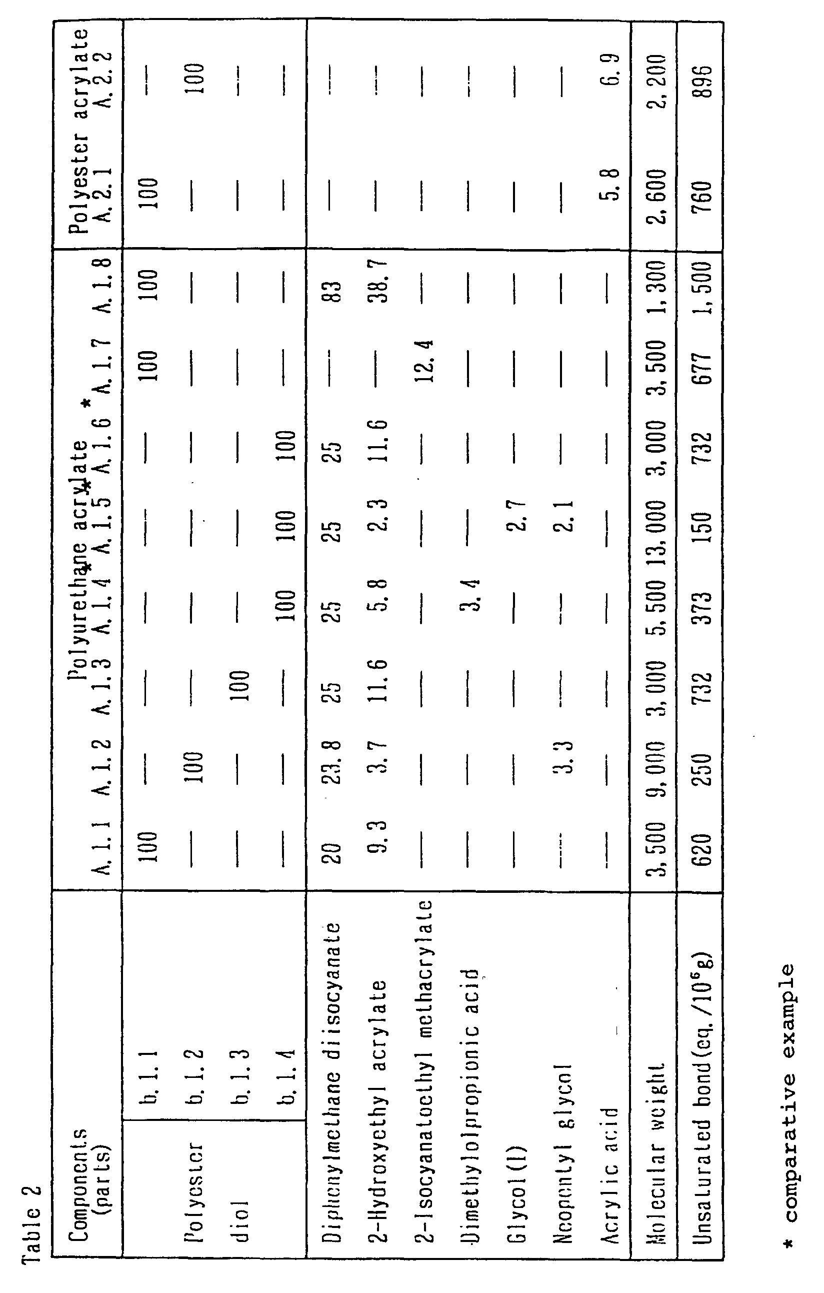

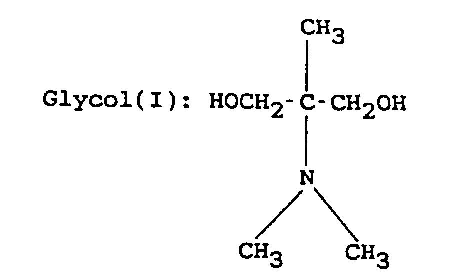

### (4) Preparation of an aqueous resin composition

First, 100 parts of methyl ethyl ketone solution of the polyurethane acrylate (A.1.1) obtained in Section (3), 96 parts of butyl cellosolve and 384 parts of water were charged into a reactor equipped with a thermometer, an agitator and a distilling condenser. Then, the mixture was heated at a temperature in the range of 60 to 70°C and the methyl ethyl ketone was removed by distillation under reduced pressure.

Next, 60 parts of methyl methacrylate (B.1) was added to the aqueous dispersion so obtained, followed by agitation for 0.5 hours. Then, 0.35 parts of t-butyl peroxy-2-ethylhexanoate (E.1) was added to the mixture, and the air inside the reactor was replaced by nitrogen. After that, the mixture was heated to 80°C with stirring, thereby starting the polymerization. The polymerization was allowed to continue for 5 hours to obtain an aqueous resin composition (1) containing a reaction mixture of the polyurethane acrylate (A.1.1) and methyl methacrylate.

Aqueous resin compositions (2) to (10) shown in Table 3 were obtained by using the polyurethane acrylates (A.1.2), (A.1.3), [(A.1.4), (A.1.5), comparative examples], (A.1.7), or (A.1.8); or the polyester acrylates (A.2.1) or (A. 2.2); and compounds (B.1), (B.2) or (B.3) having at least one unsaturated bond in accordance with the same process as above.

When the polyurethane acrylate (A.1.4, comparative example) or (A.1.5, comparative example) was used, the equivalent amount of tri-n-butylamine or acetic acid was added thereto respectively so that the polyurethane acrylate was converted into salt to obtain an aqueous resin composition. Moreover, when polyurethane acrylate (A.1.6, comparative example) which does not have any polar groups was used, the resin was precipitated and a uniform aqueous resin composition was not obtained.

The components and evaluations of the respective aqueous resin compositions (1) to (10) thus obtained are shown in Table 3.

**Table 3**

| | | Aqueous resin composition | | | | | | | | | |
|---|---|---|---|---|---|---|---|---|---|---|---|
| | | (1) | (2) | (3) | (4)* | (5)** | (6) | (7) | (8) | (9) | (10) |
| Polyurethane acrylate | A.1.1 | 60 | ― | ― | ― | ― | ― | ― | ― | ― | ― |
| | A.1.2 | ― | 60 | ― | ― | ― | ― | ― | ― | ― | ― |
| | A.1.3 | ― | ― | 60 | ― | ― | 60 | ― | ― | ― | ― |
| | A. 1.4 * | ― | ― | ― | 60 | ― | ― | ― | ― | ― | ― |
| | A. 1.5 * | ― | ― | ― | ― | 60 | ― | ― | ― | ― | ― |
| | A. 1.6 * | ― | ― | ― | ― | ― | ― | ― | ― | ― | ― |
| | A.1.7 | ― | ― | ― | ― | ― | ― | 60 | ― | ― | ― |
| | A.1.8 | ― | ― | ― | ― | ― | ― | ― | 85 | ― | ― |
| Polyester acrylate | A.2.1 | ― | ― | ― | ― | ― | ― | ― | ― | 60 | ― |
| | A.2.2 | ― | ― | ― | ― | ― | ― | ― | ― | ― | 60 |
| Methyl methacrylate (B.1) | | 60 | 20 | 50 | ― | 120 | ― | 60 | ― | 60 | 20 |
| 2-Hydroxyethyl methacrylate (B.2) | | ― | 10 | 10 | ― | ― | 10 | ― | ― | ― | 10 |
| Styrene (B. 3) | | ― | ― | ― | 20 | ― | 30 | ― | 15 | ― | ― |
| Butyl cellosolve | | 96 | 54 | ― | 19 | 144 | 47 | 96 | 35 | 96 | 54 |
| Isopropanol | | ― | ― | 96 | ― | ― | ― | ― | ― | ― | ― |
| Water | | 384 | 306 | 384 | 168 | 576 | 186 | 384 | 198 | 384 | 306 |
| Appearance | | Opaque and milky | | | | | | | | | |
| Stability | at 25°C for 40 days | Not changed | | | | | | | | | |
| | at 0°C for 40 days | Not changed | | | | | | | | | |

| | | | | | | | | | | | |
|---|---|---|---|---|---|---|---|---|---|---|---|
| * comparative example | | | | | | | | | | | |

### Example 1

Aqueous resin compositions (1), [(4) and (5), comparative examples], (7) and (9) were coated onto polyethylene terephthalate (PET) films respectively with a thickness of 125 *µ*m by using a bar coater so that the thickness of the coating films would be 10 *µ*m, after which the coating films obtained were dried for 20 min. at 100°C. The properties such as adhesion to PET film, surface hardness and resistance for water of the coating films were evaluated. The adhesion and surface hardness were evaluated by the method of JIS K5400 and pencil hardness test of JIS K5400,respectively. The resistance to water was evaluated by effecting the adhesion test after the immersion of the coated PET films in hot water at 40°C for 24 hours. The results of the respective tests are shown in Table 4 together with those of comparative examples 1 and 2.

### Comparative example 1

The same procedure was repeated as in Example 1 except that a dispersion containing the polyester diol (b.1.3) was used instead of the aqueous resin composition of the present invention.

### Comparative example 2

The same procedure was repeated as in Example 1 except that the aqueous resin composition (8) was used.

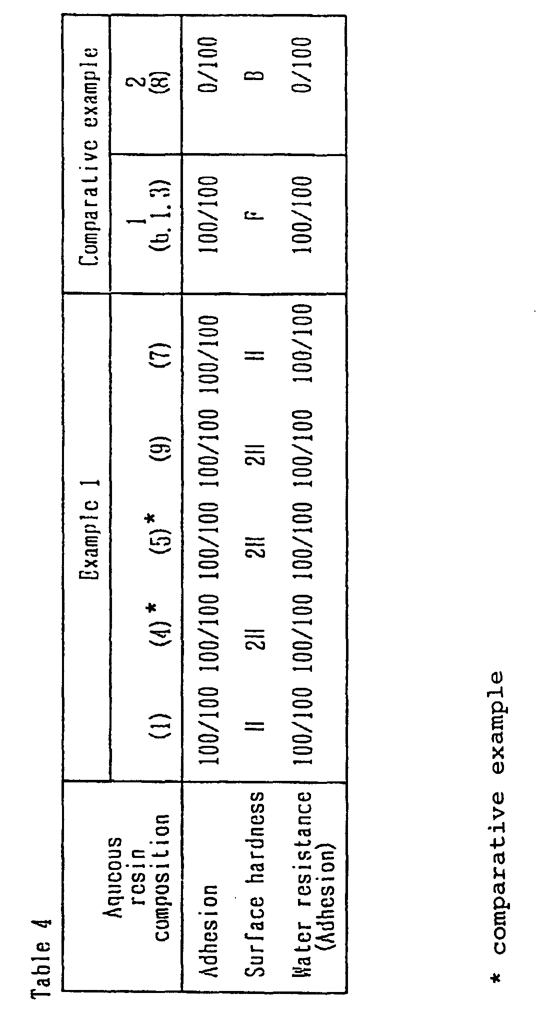

### Example 2

First, 20 parts of melamine resin (Sumimal M-50W) and 50 parts of titanium dioxide were added to 100 parts of solid contained in the aqueous resin composition (2), (3), (6), or (10). Then, the titanium dioxide was dispersed in the mixture, thereby obtaining a coating. This coating was coated onto a galvanized steel plate so that the coated material would be 10 µm after being dried. The coated material was dried at 100°C for 20 min , after which it was baked at 280°C for one min.

The adhesion of the coating film obtained, and the surface hardness, workability, image clarity, gloss, and water resistance of the coated galvanized steel plate were evaluated.

The workability was evaluated by the following method. First, a steel plate was bent with the coated surface thereof outside and was checked to see whether cracks were formed or not at the bent portion. When cracks were not formed, the evaluation was made 0T. When cracks were formed, a new coated steel plate was prepared. Then, the same test as above was performed so that one sheet of steel plate with the same thickness as that of the above coated steel plate was sandwiched between the bent steel plate. When cracks were not formed, the evaluation was made 1T. When cracks were formed, a new coated steel plate was prepared. Then the same test as above was performed so that two sheets of steel plates with the same thickness as that of the above coated steel plate was sandwiched between the bent steel plate. When cracks were not formed, the evaluation was made 2T. In this way, the number of the steel plates in which cracks were not formed was checked by increasing the number of the steel plates for insertion.

Image clarity and gloss were evaluated by the following method, respectively.

Image clarity: evaluation achieved by using an apparatus for evaluating image clarity (PGD IV-type produced by Nippon Shikisai Kenkyusho Co., Ltd.) with respect to the image clarity.

Gloss: values obtained by measuring the ratio of the strength of the specular reflection (reflectance) to incident light at 60° by using Gloss meter model TC-108D (produced by Tokyo Denshoku Co., Ltd.).

The resistance to boiling water was evaluated by immersing the coated steel plates in boiling water for one hour, and observing a change of the appearance thereof.

The results of these tests are shown in Table 5 together with those of Comparative examples 3 and 4.

### Comparative example 3

The same procedure was prepared as in Example 2 except that a dispersion containing the polyester diol (b.1.3) was used instead of the aqueous resin composition of the present invention.

### Comparative example 4

The same procedure was repeated as in Example 2 except that the composition (8) was used as an aqueous resin composition.

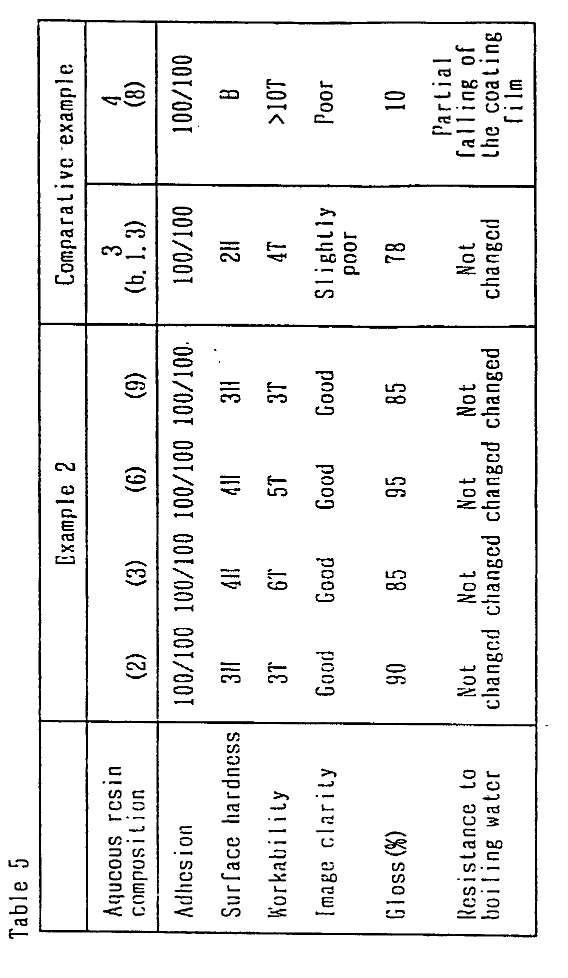

### Example 3

An aqueous resin composition (11) was obtained by the same method as that for obtaining the aqueous resin composition (1) except that the amount of methyl methacrylate was made 50 parts, and moreover, 1.0 parts of acrylic acid was added. The components of the composition (11) are shown as follows:

| | |
|---|---|
| Polyurethane acrylate (A.1.1) | 60 parts |
| Methyl methacrylate | 50 parts |
| Acrylic acid | 1 part |
| Butyl cellosolve | 96 parts |
| Water | 384 parts |

A release paper was coated with this composition (11) by the same method as in Example 1 except that the thickness of the coated film was 100 *µ*m after being dried. Moreover, in this case, the coated release paper was dried at 20°C for 10 hours instead of 100°C for 20 min. Then, the dried film formed thereon was separated from the release paper. One gram of the obtained film was immersed in 1000 g of the composition (11) at 20°C for 10 hours. The film was completely dispersed in the composition (11) again.

### Comparative example 5

The same test as in Example 3 was performed except that a dispersion containing the polyester diol (b.1.3) instead of the composition (11) was used. As a result, it was found that 9.5 g of coating film remained on the steel plate after the immersion in the dispersion for 10 hours.

### Example 4

PET was extruded at 280 to 300°C, and cooled by a cooling roller at 15°C, thereby obtaining an unstretched film with a thickness of 130 *µ*m. This unstretched film was stretched 3.5-fold in the longitudinal direction by using a pair of rollers at 85°C, each circumferential speed of which is different from each other. This uniaxial oriented film was subjected to the corona discharge treatment, and the aqueous resin composition (1) was coated onto the surface treated with the corona discharge by using an air knife. The film so obtained was dried with hot air at 70°C, and then stretched 3.5-fold in the width direction at 98°C by using a tenter. Moreover, this film was thermally fixed at a temperature in the range of 200 to 210°C. In this way, a biaxial oriented coating polyester film with a thickness of 12 *µ*m was obtained.

The film obtained was evaluated in the same way as in Example 1, and the following results were obtained.

| | |
|---|---|
| Adhesion | 100/100 |
| Surface hardness | H |
| Water resistance (adhesion) | 100/100 |

As mentioned above, it is noted that when the aqueous resin composition of the present invention is used as a coating for a polyethylene terephthalate film or a galvanized steel plate, the film formation property is excellent, the coated film obtained has a satisfactory adhesion property, and the coated steel plate is excellent in properties such as surface hardness, workability, image clarity, gloss, and water resistance. Moreover, the coating film obtained can be readily dispersed in an aqueous solvent or in the original aqueous resin composition again.

## Claims

1. An aqueous resin composition obtained by polymerizing a resin (A) selected from the group consisting of polyurethane acrylate, polyester acrylate, epoxy acrylate, and polyacrylate having at least one polar group and at least one unsaturated double bond per one molecule with a compound (B) having at least one unsaturated double bond per one molecule in an aqueous solvent containing a water soluble organic compound (D) in water (C),
wherein said resin (A) has a residue of a compound having an unsaturated double bond at the terminal of the molecule of said resin (A) through at least one bond selected from the group consisting of an urethane bond, an ester bond, an ether bond, and an amide bond,
said polar groups are contained in said resin (A) at the rate of 5 to 4000 eq/10⁶ g of resin (A) and are selected from the group consisting of the polar groups represented by the following formulas: 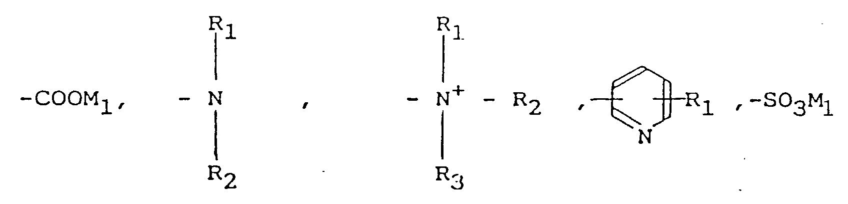 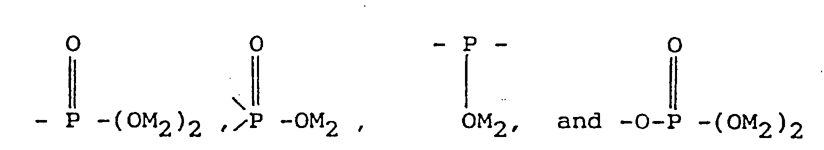
wherein M₁ represents a hydrogen atom, alkali metal, tetraalkylammonium, or tetraalkylphosphonium; M₂ represents a hydrogen atom, alkali metal, a univalent hydrocarbon group, or an amino group; and R₁, R₂ and R₃ independently represent a hydrogen atom, alkyl, allyl, or aralkyl with 1 to 8 carbon atoms, said unsaturated double bond in the resin (A) is an acrylic double bond, an allyl type double bond, or a maleic type double bond and is existing in the resin (A) at a rate of 5 to 1500 eg/10⁶ g of resin (A),
said compound (B) is a compound having an unsaturated double bond selected from an acrylic double bond, an allyl type double bond and a maleic type double bond, or is a compound selected from vinyl acetate, vinyl chloride, vinyl ethers, vinyl esters, heterocyclic vinyl compounds, N-vinyl compounds, styrene or derivatives thereof, and olefin compounds,
said compound (D) is selected from ethanol, isopropanol, methylcellosolve, ethyl-cellosolve and butylcellosolve and is contained in said solvent in an amount not exceeding 70 %, and
the aqueous resin composition is obtained by graft-polymerizing said compound (B) to said resin (A) or by the block copolymerization of said resin (A) and said compound (B).

2. An aqueous resin composition according to claim 1, wherein said water soluble organic compound (D) dissolves at the rate of 20 g or more per 1 ℓ of water at 20°C.

3. An aqueous resin composition according to claim 1, wherein said polymerization reaction is a radical polymerization reaction caused by heating.

4. An aqueous resin composition according to claim 1, wherein said compound (B) is at least one selected from the group consisting of (meth)acrylic acid esters, (meth)acrylamide or derivatives thereof, (meth)acrylic acid, crotonic acid or derivatives thereof, itaconic acid or derivatives thereof and maleic acid or derivatives thereof.

## Patentansprüche

1. Wässrige Harzzusammensetzung, erhalten durch Polymerisieren eines Harzes (A), ausgewählt aus der aus Polyurethanacrylat, Polyesteracrylat, Epoxyacrylat und Polyacrylat bestehenden Gruppe mit wenigstens einer polaren Gruppe und wenigstens einer ungesättigten Doppelbindung pro Molekül, mit einer Verbindung (B) mit wenigstens einer ungesättigten Doppelbindung pro Molekül in einem wässrigen Lösungsmittel, enthaltend eine wasserlösliche organische Verbindung (D) in Wasser (C), wobei das Harz (A) den Rest einer Verbindung mit einer ungesättigten Doppelbindung am Ende des Moleküls des Harzes (A) durch wenigstens eine Bindung, ausgewählt aus der aus einer Urethanbindung, einer Esterbindung, einer Etherbindung und einer Amidbindung bestehenden Gruppe aufweist, wobei die polaren Gruppen im Harz (A) mit einem Verhältnis von 5 bis 4000 Eq/10⁶ g von Harz (A) enthalten sind und aus der aus den durch die folgenden Formeln dargestellten polaren Gruppen bestehenden Gruppe ausgewählt sind: 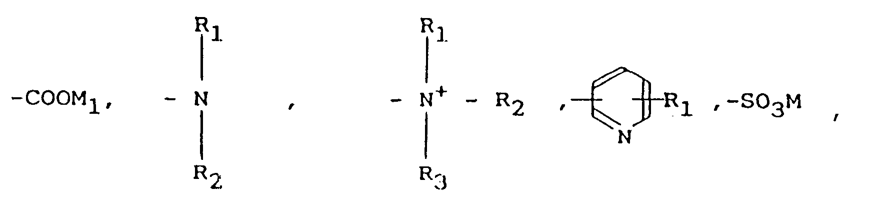 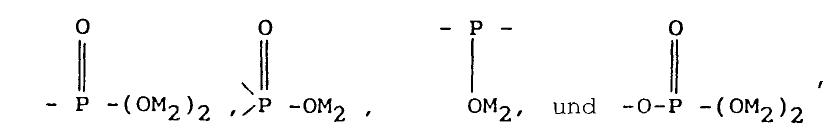
wobei M₁ ein Wasserstoffatom, Alkalimetall, Tetraalkylammonium oder Tetraalkylphosphonium darstellt; M₂ ein Wasserstoffatom, Alkalimetall, eine einwertige Kohlenwasserstoffgruppe oder eine Aminogruppe darstellt und R₁, R₂ und R₃ unabhängig voneinander ein Wasserstoffatom, ein Alkyl, Allyl oder Aralkyl mit 1 bis 8 Kohlenstoffatomen darstellen, wobei die ungesättigte Doppelbindung im Harz (A) eine acrylische Doppelbindung, eine Doppelbindung vom Allyltyp oder eine Doppelbindung vom Maleinsäuretyp ist und im Harz (A) mit einem Verhältnis von 5 bis 1500 Eq/10⁶ g Harz (A) vorliegt,
Verbindung (B) eine Verbindung mit einer ungesättigten Doppelbindung ist, die aus einer acrylischen Doppelbindung, einer Doppelbindung vom Allyltyp oder einer Doppelbindung vom Maleinsäuretyp ausgewählt ist oder die eine Verbindung ist, die aus Vinylacetat, Vinylchlorid, Vinylethern, Vinylestern, heterocyclischen Vinylverbindungen, N-Vinylverbindungen, Styrol oder Derivaten davon und Olefinverbindungen ausgewählt ist,
Verbindung (D) eine Verbindung ist, die aus Ethanol, Isopropanol, Methylcellosolve, Ethylcellosolve oder Butylcellosolve ausgewählt ist und im Lösungsmittel in einer Menge enthalten ist, die 70 % nicht überschreitet, und
die wässrige Harzzusammensetzung durch das Pfropfpolymerisieren der Verbindung (B) an Harz (A) oder durch das Block-Copolymerisieren des Harzes (A) und der Verbindung (B) erhalten wird.

2. Wässrige Harzzusammensetzung nach Anspruch 1, wobei die wasserlösliche organische Verbindung (D) sich mit einer Menge von 20 g oder mehr in 1 l Wasser bei 20 °C löst.

3. Wässrige Harzzusammensetzung nach Anspruch 1, wobei die Polymerisations-Reaktion eine durch Erhitzen verursachte radikalische Polymerisation ist.

4. Wässrige Harzzusammensetzung nach Anspruch 1, wobei die Verbindung (B) wenigstens eine aus der aus (Meth)Acrylsäureestern, (Meth)Acrylsäureamiden oder Derivaten davon, (Meth)Acrylsäure, Crotonsäure oder Derivaten davon, Itaconsäure oder Derivaten davon und Maleinsäure oder Derivaten davon bestehenden Gruppe ausgewählte Verbindung ist.

## Revendications

1. Composition aqueuse de résine obtenue en polymérisant une résine (A) choisie dans le groupe formé par des poly(acrylate d'uréthanne), poly(ester acrylate), époxy acrylate et polyacrylate ayant au moins un groupe polaire et au moins une double liaison insaturée pour une molécule avec un composé (B) ayant au moins une double liaison insaturée pour une molécule dans un solvant aqueux contenant un composé organique hydrosoluble (D) dans l'eau (C),
dans laquelle ladite résine (A) possède un résidu d'un composé ayant une double liaison insaturée fixé à l'extrémité de la molécule de ladite résine (A) par l'intermédiaire d'au moins une liaison choisie dans le groupe se composant d'une liaison uréthanne, d'une liaison ester, d'une liaison éther et d'une liaison amide,
lesdits groupes polaires sont contenus dans ladite résine (A) à raison de 5 à 4000 éq/10⁶ g de résine (A) et sont choisis dans le groupe formé par les groupes polaires représentés par les formules suivantes: 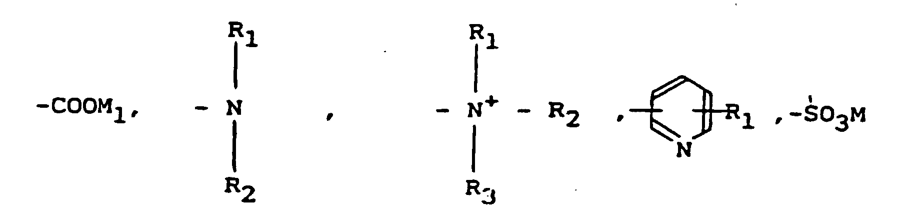 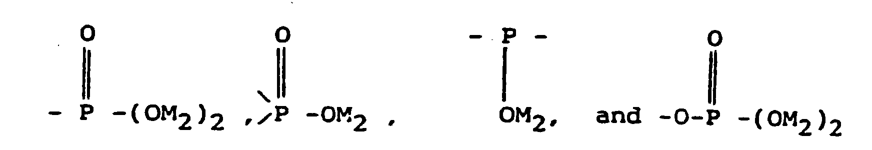
dans lesquelles M₁ représente un atome d'hydrogène, un métal alcalin, un tétraalkylammonium, ou un tétraalkylphosphonium; M₂ représente un atome d'hydrogène, un métal alcalin, un groupe hydrocarboné univalent, ou un groupe amino; et R₁, R₂ et R₃ représentent, indépendamment les uns des autres, un atome d'hydrogène, un groupe alkyle, allyle ou aralkyle avec 1 à 8 atomes de carbone, ladite double liaison insaturée dans la résine (A) est une double liaison acrylique, une double liaison de type allylique, ou une double liaison de type maléique et existe dans la résine (A) à raison de 5 à 1500 éq/10⁶ g de résine (A),
ledite composé (B) est un composé ayant une double liaison insaturée choisie parmi une double liaison acrylique, une double liaison de type allylique et une double liaison de type maléique, ou est un composé choisi parmi l'acétate de vinyle, le chlorure de vinyle, les éthers vinyliques, les esters vinyliques, les composés vinyliques hétérocycliques, les composés N-vinyliques, le styrène ou ses dérivés, et les composés oléfiniques,
ledit composé (D) est choisi parmi l'éthanol, l'isopropanol, la méthylcellosolve, l'éthylcellosolve ou la butylcellosolve et est contenu dans ledit solvant en une quantité ne dépassant pas 70 %, et
la composition aqueuse de résine est obtenue en polymérisant par greffage ledit composé (B) à ladite résine (A) ou par copolymérisation séquencée de ladite résine (A) et dudit composé (B).

2. Composition aqueuse de résine selon la revendication 1, dans laquelle le composé organique hydrosoluble (D) se dissout à raison de 20 g ou plus pour 1 l d'eau à 20°C.

3. Composition aqueuse de résine selon la revendication 1, dans laquelle ladite réaction de polymérisation est une polymérisation radicalaire amorcée par chauffage.

4. Composition aqueuse de résine selon la revendication 1, dans laquelle ledit composé (B) est au moins un composé choisi dans le groupe formé par les esters d'acide (méth)acrylique, le (méth)acrylamide ou ses dérivés, l'acide (méth)acrylique, l'acide crotonique ou ses dérivés, l'acide itaconique ou ses dérivés et l'acide maléique ou ses dérivés.
